# EUROPÄISCHE PATENTSCHRIFT

(11) **EP 3 601 136 B1**
(45) Veröffentlichungstag und Bekanntmachung des Hinweises auf die Patenterteilung: **05.05.2021**
(21) Anmeldenummer: 18712893.9
(22) Anmeldetag: 22.03.2018
(51) Int. Cl.: B66B 13/26, B66B 5/00

(54) **VERFAHREN UND VORRICHTUNG ZUM ÜBERWACHEN EINER AUFZUGKABINENTÜR**
METHOD AND DEVICE FOR MONITORING A LIFT CABIN DOOR
PROCÉDÉ ET DISPOSITIF DE SURVEILLANCE D'UNE PORTE DE CABINE D'ASCENSEUR

(30) Priorität: 27.03.2017 EP 17163131
(43) Veröffentlichungstag der Anmeldung: 05.02.2020
(73) Patentinhaber: Inventio AG, 6052 Hergiswil (CH)
(72) Erfinder: TSCHUPPERT, Reto, 6015 Luzern (CH); KUSSEROW, Martin, 6005 Luzern (CH)
(86) Internationale Anmeldenummer: PCT/EP2018/057328
(87) Internationale Veröffentlichungsnummer: WO 2018/177891

(56) Entgegenhaltungen:
- US-A1- 2003 168 288
- US-A1- 2017 015 521
- US-B1- 6 392 537

## Beschreibung

Die vorliegende Erfindung betrifft ein Verfahren sowie eine Vorrichtung, mithilfe derer eine Aufzugkabinentür hinsichtlich ihres aktuellen Schliesszustandes überwacht werden kann, insbesondere von einem entfernt gelegenen Kontrollzentrum aus.

Eine Aufzuganlage kann mithilfe einer verlagerbaren Aufzugkabine Passagiere innerhalb eines Gebäudes oder Bauwerks transportieren. Die Aufzugkabine weist dabei wenigstens eine Aufzugkabinentür auf, welche geöffnet und geschlossen werden kann, um einen Zugang zu der Aufzugkabine freizugeben bzw. zu blockieren.

Dabei muss unter anderem sichergestellt sein, dass die Aufzugkabinentür korrekt geschlossen ist, bevor die Aufzugkabine verlagert wird, da ansonsten Passagiere, welche durch die nicht vollständig geschlossene Aufzugkabinentür in die Aufzugkabine eintreten oder aus dieser austreten könnten, durch die sich mit teilweise offener Kabinentür bewegende Aufzugkabine verletzt werden könnten. Zu diesem Zweck sind in Aufzuganlagen üblicherweise ein oder mehrere Türschalter vorgesehen, welche mit einer Steuerung der Aufzuganlage Signale austauschen können, so dass die Steuerung ein Verlagern der Aufzugkabine erst anweist, wenn von dem Türschalter ein korrektes vollständiges Schliessen der Aufzugkabinentür signalisiert wird.

Ferner werden in Aufzugkabinen üblicherweise Vorkehrungen getroffen, um zu verhindern, dass Passagiere von einer sich schliessenden Aufzugkabinentür behindert oder sogar verletzt werden. Zu diesem Zweck kann beispielsweise eine Lichtschranke oder ein Lichtvorhang eingesetzt werden, um zu erkennen, ob sich aktuell ein Passagier im Bereich der Aufzugkabinentür befindet, so dass für diesen Fall ein weiteres Schliessen der Aufzugkabinentür verhindert oder ein Schliessvorgang sogar umgekehrt werden kann. Auch in diesem Fall ist die Lichtschranke bzw. der Lichtvorhang typischerweise mit der Steuerung der Aufzuganlage verbunden, so dass diese anhand von entsprechend empfangenen Signalen entscheiden kann, ob bzw. wie die Aufzugkabinentür verfahren werden darf.

In herkömmlichen Aufzuganlagen ist somit standardmässig meist vorgesehen, einen Schliesszustand der Aufzugkabinentür anhand von beispielsweise durch den Türschalter und/oder den Lichtvorhang erzeugten Signalen an die Steuerung der Aufzuganlage zu signalisieren. Allerdings sind bisher bei Aufzuganlagen im Allgemeinen keine Vorkehrungen vorgesehen, mithilfe derer überwacht werden kann, ob beispielsweise die von dem Türschalter und/oder dem Lichtvorhang zu überwachenden Zustände korrekt ermittelt und entsprechende Signale korrekt an die Steuerung der Aufzuganlage übermittelt werden und somit der sichere Betrieb der Aufzuganlage gewährleistet ist.

In der US 2003/168288 A1 wird ein Video Überwachungssystem zum Überwachen einer Aufzugkabinentür beschrieben. Das Überwachungssystem verfügt über einen 3D-Sensor zur Erfassung von dreidimensionalen Bildern der Aufzugkabinentür. Zur Überwachung der Aufzugkabinentür werden Abweichungen zwischen verschiedenen Bildern erkannt und ausgewertet.

Es kann somit ein Bedarf an einem Verfahren bzw. einer Vorrichtung bestehen, mithilfe derer die Aufzugkabinentür in einer alternativen oder ergänzenden Weise überwacht werden kann. Insbesondere kann ein Bedarf an einem Verfahren zum Modernisieren bestehender Aufzuganlagen bestehen, um bei diesen die Aufzugkabinentür in geeigneter Weise überwachen zu können.

Einem solchen Bedarf kann jeweils mit dem Gegenstand eines der unabhängigen Ansprüche entsprochen werden. Vorteilhafte Ausführungsformen sind in den abhängigen Ansprüchen sowie der nachfolgenden Beschreibung angegeben.

Gemäss einem ersten Aspekt der Erfindung wird ein Verfahren zum Überwachen einer Aufzugkabinentür beschrieben. Das Verfahren umfasst zumindest die folgenden Schritte: Es wird eine Entfernung anhand von durch eine Entfernungsmesseinrichtung in Richtung der Aufzugkabinentür ausgesendetem und abhängig von einem aktuellen Schliesszustand der Aufzugkabinentür an der Aufzugkabinentür reflektiertem Licht ermittelt. Anschliessend wird eine Information über den aktuellen Schliesszustand der Aufzugkabinentür allein durch ein Vergleichen der ermittelten Entfernung mit einer zuvor ermittelten Referenzentfernung abgeleitet. Abschliessend wird ein diese Information wiedergebendes Signal ausgegeben.

Gemäss einem zweiten Aspekt der Erfindung wird eine Überwachungsvorrichtung zum Überwachen einer Aufzugkabine beschrieben, welche dazu eingerichtet ist, das Verfahren gemäss dem ersten Aspekt der Erfindung auszuführen.

Gemäss einem dritten Aspekt der Erfindung wird eine Aufzuganlage beschrieben, welche eine Aufzugkabine mit einer Aufzugkabinentür und eine Überwachungsvorrichtung gemäss einer Ausführungsform des zweiten Aspekts der Erfindung aufweist.

Gemäss einem vierten Aspekt der Erfindung wird ein Verfahren zum Überwachen einer Aufzugkabinentür von einem entfernten Kontrollzentrum aus beschrieben. Das Verfahren umfasst dabei das Installieren einer Überwachungsvorrichtung gemäss einer Ausführungsform des zweiten Aspekts der Erfindung benachbart zur Kabinentür und anschliessend das Auswerten des von der Überwachungsvorrichtung ausgegebenen Signals in dem Kontrollzentrum, um daraus die Information über den aktuellen Schliesszustand der Aufzugkabinentür zu ermitteln.

Gemäss einem fünften Aspekt der Erfindung wird ein Verfahren zum Modernisieren einer Aufzuganlage beschrieben, welches das Installieren einer Überwachungseinrichtung gemäss einer Ausführungsform des zweiten Aspekts der Erfindung benachbart zu einer Aufzugkabinentür der Aufzuganlage umfasst.

Mögliche Merkmale und Vorteile von Ausführungsformen der Erfindung können unter anderem und ohne die Erfindung einzuschränken als auf nachfolgend beschriebenen Ideen und Erkenntnissen beruhend angesehen werden.

Wie einleitend bereits kurz angemerkt, wird der aktuelle Schliesszustand einer Aufzugkabinentür in herkömmlichen Aufzuganlagen im Allgemeinen mittels bereits herstellerseitig in die Aufzuganlage eingebauter Überwachungskomponenten wie insbesondere Türschaltern überwacht. Neben mechanisch arbeitenden Überwachungskomponenten wurden alternativ auch Überwachungskomponenten entwickelt, die sich anderer physikalischer Messprinzipien bedienen. Beispielsweise wird in der WO 2004/084556 A1 ein System zur Raumüberwachung im Bereich eines Aufzugs mittels eines 3D-Sensors beschrieben, mithilfe dessen unter anderem auch die Aufzugkabinentür beobachtet werden kann.

Allerdings wurden herkömmlich Massnahmen zum Überwachen des Schliesszustands der Aufzugkabinentür im Regelfall bereits vom Hersteller der Aufzuganlage geplant und in der Aufzuganlage installiert und dabei vorgesehen, dass die von der jeweiligen Überwachungskomponente erzeugten Signale an eine Steuerung der gesamten Aufzuganlage oder zumindest an eine Steuerung der Aufzugkabinentür übermittelt werden, so dass diese beim jeweiligen Steuern der Aufzuganlage bzw. der Aufzugkabinentür die Information über den aktuellen Schliesszustand der Aufzugkabinentür berücksichtigen können. Ein ergänzendes Übermitteln dieser Signale an andere Nutzer war im Allgemeinen nicht vorgesehen. Ferner war bei der in der WO 2004/084556 A1 beschriebenen Raumüberwachung eine verhältnismässig aufwendige Datenverarbeitung notwendig, um aus 3-dimensionalen Bilddaten auf den aktuellen Schliesszustand der Aufzugkabinentür rückschliessen zu können.

Es wurde nun erkannt, dass es vorteilhaft sein kann, die Information über den aktuellen Schliesszustand der Aufzugkabinentür nicht nur anderen Komponenten der Aufzuganlage selbst verfügbar zu machen, sondern diese auch extern abrufen zu können. Insbesondere wurde es als vorteilhaft erkannt, diese Information in einem entfernt gelegenen Kontrollzentrum abrufbar zu machen. Dadurch können beispielsweise von dem Kontrollzentrum aus bereits Erkenntnisse über das korrekte Funktionieren der Aufzuganlage gezogen werden. Hierauf basierend können beispielsweise Wartungs- oder Reparaturmassnahmen initiiert werden.

Insbesondere wurde es als vorteilhaft erkannt, eine solche Möglichkeit zur externen Überwachung von Schliesszuständen der Aufzugkabinentür auch in bereits bestehenden Aufzuganlagen nachrüsten zu können. Dabei kann unter anderem die Problematik bestehen, dass beispielsweise bei Fremdfabrikaten, das heisst Aufzuganlagen, die von einem anderen Hersteller geplant und installiert wurden, keine ausreichenden Informationen über die Funktionsweisen von dort bereits herstellerseitig integrierten Überwachungskomponenten verfügbar sind. Insbesondere kann bei bereits existierenden Aufzuganlagen nicht vorgesehen sein, eine zwar innerhalb der Aufzuganlage verfügbare Information über den aktuellen Schliesszustand der Aufzugkabinentür auch beispielsweise über vorab vorgesehene Schnittstellen nach aussen hin verfügbar zu machen.

Mit dem hierin vorgestellten Verfahren bzw. der entsprechend ausgestalteten Überwachungsvorrichtung wird eine verhältnismässig einfach umzusetzende Möglichkeit beschrieben, um insbesondere in bereits existierenden Aufzuganlagen eine Information über einen aktuellen Schliesszustand einer Aufzugkabinentür erhalten zu können und ein diese Information wiedergebendes Signal nach aussen hin verfügbar zu machen. Beispielsweise kann das Signal an ein entfernt angeordnetes Kontrollzentrum weitergeleitet werden und dort ausgewertet werden. Dabei wird, insbesondere im Gegensatz zu dem in WO 2004/084556 A1 beschriebenen Ansatz, angestrebt, das Überwachungsverfahren mit möglichst einfachen technischen Mitteln und/oder mit einer möglichst einfachen Signalauswertung umsetzen zu können.

Um diese Vorgaben zu erreichen, wird vorgeschlagen, zur Überwachung der Aufzugkabinentür unter anderem eine verhältnismässig einfach ausgestaltete und kostengünstig herzustellende Entfernungsmesseinrichtung zu nutzen und deren Messergebnis vorzugsweise mittels einer ebenfalls verhältnismässig einfach ausgestalteten und kostengünstig herzustellenden Auswerteinrichtung auszuwerten.

Die Entfernungsmesseinrichtung kann hierbei Entfernungen oder Tiefeninformationen basierend auf optischen Messprinzipien messen. Hierzu kann die Entfernungsmesseinrichtung Licht in Richtung der Aufzugkabinentür bzw. hin zu einer von der Aufzugkabinentür zu verschliessenden Öffnung der Aufzugkabine aussenden. Je nachdem, in welchem Schliesszustand die Aufzugkabinentür sich aktuell befindet, wird zumindest ein Teil dieses ausgesandten Lichts an einer Oberfläche der Aufzugkabinentür reflektiert und kann von der Entfernungsmesseinrichtung wieder detektiert werden. Basierend auf diesem detektierten reflektierten Licht kann die Entfernungsmesseinrichtung unter Nutzung verschiedener physikalischer Messprinzipien auf die Entfernung einer das Licht reflektierenden Oberfläche rückschliessen. Diese Information über die Entfernung einer das ausgesendete Licht reflektierenden Oberfläche kann dann dazu genutzt werden, um die gewünschte Information über den aktuellen Schliesszustand der Aufzugkabinentür zu erhalten.

Dabei wird davon ausgegangen, dass für den Fall, dass die Aufzugkabinentür vollständig oder zumindest teilweise geschlossen ist, an der zu der Entfernungsmesseinrichtung gerichteten Oberfläche der Aufzugkabinentür ein wesentlicher Anteil des dorthin ausgesendeten Lichts reflektiert wird. In diesem Fall misst die Entfernungsmesseinrichtung somit einen Abstand hin zu der reflektierenden Oberfläche der Aufzugkabinentür. Wenn die Aufzugkabinentür nicht oder zumindest nicht vollständig geschlossen ist, wird derjenige Teil des ausgesendeten Lichts, der bei geschlossener Aufzugkabinentür an deren Oberfläche reflektiert würde, jedoch nicht oder allenfalls von einer dahinterliegenden Oberfläche, beispielsweise einer Oberfläche in einem hinter der Aufzugkabinentür liegenden Flur oder Raum, reflektiert. In diesem Fall misst die Entfernungsmesseinrichtung nicht den Abstand bis zur Aufzugkabinentür, sondern bis zu der dahinterliegenden reflektierenden Oberfläche. Durch ein Vergleichen der ermittelten Entfernung mit einer zuvor ermittelten Referenzentfernung kann somit auf den aktuellen Schliesszustand der Aufzugkabine rückgeschlossen werden.

Mit anderen Worten kann gemäss einer Ausführungsform der Erfindung die hierin beschriebene Überwachungsvorrichtung eine optisch arbeitende Entfernungsmesseinrichtung sowie eine Auswerteeinrichtung aufweisen. Dabei kann die Entfernungsmesseinrichtung dazu eingerichtet sein, anhand von ausgesendetem und an einem Objekt reflektiertem Licht eine Entfernung zu dem Objekt zu ermitteln. Die Auswerteeinrichtung kann dazu eingerichtet sein, allein durch ein Vergleichen wenigstens einer von der Entfernungsmesseinrichtung ermittelten Entfernung mit einer zuvor ermittelten Referenzentfernung eine Information über den aktuellen Schliesszustand der Aufzugkabinentür abzuleiten und ein diese Information wiedergebendes Signal auszugeben.

Es soll in diesem Zusammenhang betont werden, dass es im Allgemeinen unzureichend sein dürfte, zum Überwachen der Aufzugkabinentür lediglich Licht in Richtung der Aufzugkabinentür auszusenden und zu prüfen, ob Teile dieses Lichts an der Aufzugkabinentür reflektiert werden oder nicht, um daraus rückschliessen zu können, ob die Aufzugkabinentür geschlossen, geöffnet oder teilweise geöffnet ist. Bei einem solchen Verfahren, das lediglich das Vorhandensein oder Fehlen reflektierter Anteile des ausgesendeten Lichts überwachen würde, wären häufige Fehler zu erwarten. Insbesondere könnte das ausgesendete Licht bei geöffneter Aufzugkabinentür zwar nicht an der Aufzugkabinentür, aber an anderen Gegenständen und/oder an Passagieren reflektiert werden, so dass fälschlicherweise von einer geschlossenen Aufzugkabinentür ausgegangen würde.

Um insbesondere solche Fehlermöglichkeiten auszuschliessen, wird daher vorgeschlagen, nicht lediglich die Existenz reflektierten Lichts zu detektieren bzw. analysieren, sondern das detektierte reflektierte Licht speziell zu analysieren, um daraus eine Information über die Entfernung der Oberfläche, an der das Licht reflektiert wurde, abzuleiten. Diese Information über die Entfernung kann dann eine sehr viel zuverlässigere Aussage darüber ermöglichen, ob die Aufzugkabinentür offen, geschlossen oder teilweise offen ist. Dabei können Störungen insbesondere durch in der Aufzugkabine befindliche Gegenstände oder Personen mit hoher Zuverlässigkeit ausgeschlossen werden.

Um eine Auswertung der von der Entfernungsmesseinrichtung ermittelten Entfernung möglichst einfach zu gestalten und somit die Überwachungsvorrichtung technisch einfach umsetzen zu können, wird vorgeschlagen, diese Entfernung lediglich mit einem zuvor aufgenommenen Referenzwert, das heisst einer Referenzentfernung, zu vergleichen. Insbesondere kann es genügen, zu erkennen, ob die aktuell gemessene Entfernung im Wesentlichen mit der zuvor ermittelten Referenzentfernung, gegebenenfalls unter Berücksichtigung von geeignet gewählten Toleranzen, übereinstimmt oder nicht.

Die Referenzentfernung kann dabei vorzugsweise eine zuvor bestimmte Entfernung zwischen der Entfernungsmesseinrichtung und der Aufzugkabinentür in einem vollständig oder zumindest teilweise geschlossenen Zustand sein. Wird beim späteren Betrieb der Überwachungsvorrichtung somit eine Entfernung gemessen, die der Referenzentfernung entspricht, kann davon ausgegangen werden, dass das von der Entfernungsmesseinrichtung ausgesendete Licht tatsächlich an der Aufzugkabinentür reflektiert wurde und somit davon auszugehen ist, dass diese teilweise oder vollständig geschlossen ist. Wird eine grössere Entfernung gemessen, ist davon auszugehen, dass die Aufzugkabinentür geöffnet oder zumindest teilweise geöffnet ist und das ausgesendete Licht von einem dahinterliegenden Gegenstand oder einer dahinterliegenden Wand reflektiert wird. Dabei wird ein vollständiges Fehlen von zurückreflektiertem Licht meist dahingehend interpretiert, dass eine rückreflektierende Oberfläche in einem unendlichen Abstand angenommen wird.

Wird eine kleinere Entfernung als die Referenzentfernung ermittelt, kann mit hoher Wahrscheinlichkeit davon ausgegangen werden, dass dies auf eine Störung beispielsweise aufgrund einer Reflexion von einer innerhalb der Aufzugkabine befindlichen Oberfläche, nicht jedoch von der Oberfläche der Aufzugkabinentür, zurückzuführen ist. Auch wenn in diesem Fall keine Information über den tatsächlichen Schliesszustand der Aufzugkabine ableitbar ist, so wird zumindest erkannt, dass es sich um eine Störung handelt.

Gemäss einer Ausführungsform kann die Referenzentfernung in einem vorhergehenden Kalibriervorgang ermittelt werden durch Aufnehmen wenigstens eines Entfernungsreferenzwertes, während sich die Aufzugkabinentür in einem vordefinierten Zustand befindet.

Mithilfe des Kalibriervorgangs kann somit mittels der Entfernungsmesseinrichtung diejenige Entfernung ermittelt werden, die sich bei dem vordefinierten Zustand der Aufzugkabinentür einstellt.

Insbesondere kann es bevorzugt sein, als Entfernungsreferenzwert diejenige Entfernung zu bestimmen, die sich für die Entfernungsmesseinrichtung bei vollständig geschlossener Aufzugkabinentür ergibt. Für den Fall eines solchen Entfernungsreferenzwertes kann es beim späteren Überwachen der Aufzugkabinentür genügen, die dann aktuell gemessene Entfernung lediglich qualitativ, insbesondere lediglich binär (d.h. mit einer Ja/Nein-Abfrage), mit dem Entfernungsreferenzwert zu vergleichen. Anders ausgedrückt kann es dann genügen, lediglich zu erkennen, ob der aktuell gemessene Entfernungswert grösser als der Entfernungsreferenzwert ist oder nicht. Trifft dies zu, kann von einer zumindest teilweise geöffneten Aufzugkabinentür ausgegangen werden. Trifft dies nicht zu, kann ergänzend überprüft werden, ob der aktuell gemessene Entfernungswert kleiner als der Entfernungsreferenzwert ist oder nicht. Trifft dies zu, kann davon ausgegangen werden, dass das Licht nicht an der Aufzugkabinentür, sondern an einem im Innern der Aufzugkabine befindlichen Gegenstand reflektiert wird. Lediglich für den Fall, dass erkannt wird, dass die tatsächlich gemessene Entfernung bis auf Toleranzen mit dem Entfernungsreferenzwert übereinstimmt, kann davon ausgegangen werden, dass die Aufzugkabinentür im gleichen geschlossenen Zustand ist, wie dieser während des Kalibriervorgangs vorgelegen hat. Eine quantitative Auswertung der aktuell gemessenen Entfernung ist dabei nicht notwendig. Dies ermöglicht eine verhältnismässig einfache technische Umsetzung des Überwachungsverfahrens, da das rein qualitative Vergleichen der aktuell gemessenen Entfernung mit der Referenzentfernung technisch einfacher umzusetzen ist als eine quantitative Bestimmung derselben.

Gemäss einer Ausführungsform des hierin vorgeschlagenen Verfahrens werden mehrere Entfernungen bezüglich mehrerer nebeneinander angeordneter Positionen entlang einer zu der Entfernungsmesseinrichtung gerichteten Oberfläche ermittelt. Eine Information über den aktuellen Schliesszustand der Aufzugkabinentür wird dann allein durch ein Vergleichen der mehreren ermittelten Entfernungen jeweils mit einer zugehörigen zuvor ermittelten Referenzentfernung (d_{c}) abgeleitet. Die abgeleitete Information beinhaltet dabei eine Information über einen aktuellen Verfahrzustand der Aufzugkabinentür, das heisst, gibt an, ob bzw. wie weit die Aufzugkabinentür geschlossen ist. Ein diese Information wiedergebendes Signal kann wiederum zu einer externen Stelle hin ausgegeben werden.

Übertragen auf eine Ausführungsform der hierin vorgeschlagenen Überwachungsvorrichtung kann dies bedeuten, dass die Entfernungsmesseinrichtung dazu eingerichtet ist, mehrere Entfernungen zu einem Objekt bezüglich mehrerer nebeneinander angeordneter Positionen entlang einer zu der Entfernungsmesseinrichtung gerichteten Oberfläche des Objekts zu ermitteln. Die Auswerteeinrichtung kann in diesem Fall dazu eingerichtet sein, allein durch ein Vergleichen der mehreren ermittelten Entfernungen jeweils mit einer zugehörigen zuvor ermittelten Referenzentfernung eine Information über den aktuellen Schliesszustand der Aufzugkabinentür abzuleiten, wobei diese abgeleitete Information auch eine Information über den aktuellen Verfahrzustand der Aufzugkabinentür beinhaltet. Die Auswerteeinrichtung ist dabei wiederum dazu ausgelegt, ein diese Information wiedergebendes Signal auszugeben.

Mit anderen Worten kann es vorteilhaft sein, von der Entfernungsmesseinrichtung nicht nur lediglich eine Entfernung bezogen auf eine einzelne Position an einer Oberfläche, welche eingestrahltes Licht reflektiert, zu bestimmen, sondern eine Entfernungsbestimmung für mehrere nebeneinander angeordnete Positionen durchzuführen.

Beispielsweise kann von der Entfernungseinrichtung Licht, beispielsweise in Form mehrerer Lichtstrahlen oder eines Lichtbandes, in mehrere Richtungen hin zu der Aufzugkabinentür ausgesendet werden, so dass bei beispielsweise vollständig geschlossener Aufzugkabinentür jeder der entsprechenden Lichtstrahlen von einer anderen von zueinander benachbart angeordneten Positionen an der Oberfläche der Aufzugkabinentür reflektiert wird. Für jede dieser Positionen kann zuvor ein entsprechender Referenzwert, das heisst eine entsprechende Referenzentfernung, bestimmt worden sein, beispielsweise im Rahmen eines Kalibrierungsvorgangs. Stimmen die aktuell gemessenen Entfernungen für jede der Positionen mit der Referenzentfernung im Wesentlichen überein, kann davon ausgegangen werden, dass die Aufzugkabinentür vollständig geschlossen ist. Trifft dies jedoch nur für einige der Positionen zu, kann rückgeschlossen werden, dass die Aufzugkabinentür aktuell nicht oder zumindest nicht vollständig geschlossen ist.

Insbesondere, wenn geschlussfolgert wird, dass die Aufzugkabinentür lediglich teilweise geschlossen ist, kann mit hoher Wahrscheinlichkeit darauf rückgeschlossen werden, dass die Aufzugkabinentür aktuell gerade verfahren wird.

Um noch sicherer auf den aktuellen Verfahrzustand der Aufzugkabinentür rückschliessen zu können, können mehrere solcher Entfernungsmessungen zeitlich nacheinander durchgeführt werden. Wenn dabei erkannt wird, dass sich beispielsweise die Anzahl derjenigen Positionen, für die die aktuell gemessene Entfernung mit der Referenzentfernung übereinstimmt, verändert, kann hieraus mit hoher Wahrscheinlichkeit ein Rückschluss darüber abgeleitet werden, ob die Aufzugkabinentür aktuell geöffnet wird oder ob sie aktuell geschlossen wird.

Somit kann durch Messen und Vergleichen von aktuellen Entfernungen hinsichtlich mehrerer nebeneinander gelegener Positionen nicht lediglich eine Information darüber erhalten werden, ob die Aufzugkabinentür geschlossen ist oder nicht, sondern es kann eine erweiterte Information auch darüber erhalten werden, ob die Aufzugkabinentür sich in einem teilweise geschlossenen Zustand befindet, und eventuell sogar darüber, ob bzw. in welche Richtung die Aufzugkabinentür aktuell verfahren wird, d.h. ob sie aktuell geschlossen wird oder aktuell geöffnet wird.

Eine solche erweiterte Information kann neben der Überwachung, ob die Aufzugkabinentür korrekt geöffnet bzw. geschlossen ist, auch eine Aussage darüber zulassen, ob die Aufzugkabinentür in einer vorgesehenen Weise verfahren wird.

Beispielsweise kann erkannt werden, wenn die Aufzugkabinentür zum Beispiel aufgrund von mechanischen Mängeln zu langsam verfahren wird. Ergänzend können anhand dieser erweiterten Information auch Aussagen über die aktuelle Funktion anderer Funktionalitäten in der Aufzuganlage getroffen werden.

Beispielsweise kann basierend auf der Information über den aktuellen Verfahrzustand der Aufzugkabinentür indirekt auch ein Rückschluss über ein korrektes Funktionieren eines Lichtvorhangs an der Aufzugkabine gezogen werden. Wenn beispielsweise erkannt wird, dass sich eine Person innerhalb des von der Kabinentür zu verschliessenden Kabinentürbereichs befindet, aber dennoch beobachtet wird, dass die Information über den aktuellen Verfahrzustand angibt, dass die Aufzugkabinentür aktuell geschlossen wird, kann mit hoher Wahrscheinlichkeit davon ausgegangen werden, dass die Funktionalität des Lichtvorhangs aktuell fehlerbehaftet ist. Ob sich eine Person innerhalb des Lichtvorhangs der Aufzugkabine befindet, kann gegebenenfalls sogar auch mithilfe der Überwachungsvorrichtung aufgrund entsprechend durchgeführter Entfernungsmessungen erkannt werden.

Gemäss einer Ausführungsform der Überwachungsvorrichtung ist die Entfernungsmesseinrichtung dazu eingerichtet, Licht in Form eines sich quer zu einer Lichtausbreitungsrichtung in einer Breitenrichtung erstreckenden Lichtbandes auszusenden und Licht, welches von mehreren Positionen entlang des auf das Objekt treffenden Lichtbandes reflektiert wurde, zu detektieren und daraus bezüglich jeder der Positionen die Entfernung zu dem Objekt zu ermitteln.

Mit anderen Worten kann es vorteilhaft sein, dass die Entfernungsmesseinrichtung nicht im Wesentlichen punktförmig beleuchtende Lichtstrahlen gleichzeitig oder nacheinander hin zu verschiedenen Positionen auf einer zu der Entfernungsmesseinrichtung gerichteten Oberfläche eines Objekts aussendet, sondern dass sie eine Art Lichtband aussendet, welches sich in der hierin als Breitenrichtung bezeichneten Richtung quer zu der Lichtausbreitungsrichtung erstreckt, um beispielsweise einen linearen bandförmigen Bereich eines zu vermessenden Objekts zu beleuchten. Licht, welches dann an verschiedenen Positionen entlang dieses Lichtbandes reflektiert wird, kann detektiert werden und hinsichtlich beispielsweise seiner Laufzeit analysiert werden, um den Abstand der entsprechenden Position in dem Lichtband von der Entfernungsmesseinrichtung ermitteln zu können. Für den Einsatz des Überwachens einer Aufzugkabinentür kann das Lichtband sich beispielsweise quer über die Aufzugkabinentür erstrecken, vorzugsweise in einer Richtung parallel zu der Bewegungsrichtung der Aufzugkabinentür, wenn diese sich öffnet und schliesst.

Gemäss einer Ausführungsform kann die Überwachungsvorrichtung gemäss einer Ausführungsform eine Entfernungsmesseinrichtung aufweisen, die als ein eine Tiefeninformation liefernder Scanner ausgebildet ist.

Ein solcher eine Tiefeninformation liefernder Scanner wird teilweise auch als mit strukturiertem Licht betriebener 3D-Scanner (englisch: structured-light 3D scanner) bezeichnet und ist dazu ausgelegt, die dreidimensionale Form eines Objekts unter Verwendung eines projizierten Lichtmusters und einer Kamera zu messen. Ein Projizieren eines Lichtbandes auf eine dreidimensional geformte Oberfläche erzeugt hierbei eine Beleuchtungslinie, die aus einer anderen Perspektive als derjenigen des Projektors verzerrt erscheint, und kann für eine exakte geometrische Rekonstruktion der Oberflächenform verwendet werden. Insbesondere können hierdurch Entfernungen für Positionen entlang dieses Lichtbandes in einfacher Weise ermittelt werden.

Alternativ kann gemäss einer Ausführungsform die Entfernungsmesseinrichtung der Überwachungsvorrichtung als eine eine Tiefeninformation liefernde TOF-Kamera (Time of Flight) ausgebildet sein.

TOF-Kameras sind 3D-Kamerasysteme, die mithilfe eines Laufzeitverfahrens Entfernungen messen können. Sie werden aufgrund ihrer Detektortechnologie teilweise auch PMD-Kameras genannt und leuchten mithilfe eines Lichtpulses eine zu vermessende Oberfläche aus. Dabei misst die TOF-Kamera für jeden Bildpunkt eine Zeit, die das ausgesendete Licht benötigt, um bis zu der Oberfläche des Objekts und wieder zurück zu der Kamera zu gelangen. Aus der gemessenen Zeit lässt sich die Entfernung zu dem Objekt herleiten. Dabei kann die gesamte zu vermessende Oberfläche auf einmal beleuchtet und vermessen werden und es brauchen nicht, wie bei einem Scanner, Lichtstrahlen oder Lichtbänder über die Oberfläche abtastend geleitet werden. Die Verwendung einer TOF-Kamera für die hierin beschriebenen Überwachungsaufgaben kann einerseits technisch verhältnismässig einfach umgesetzt werden. Andererseits können von der TOF-Kamera auch weitere Aufgaben innerhalb der Aufzuganlage übernommen werden. Beispielsweise könnte mithilfe der TOF-Kamera eine Anzahl von Passagieren in der Aufzugkabine gezählt werden und deren Gesamtmasse abgeschätzt werden.

Gemäss einer Ausführungsform kann das von der Entfernungsmesseinrichtung zur Messung von Entfernungen eingesetzte Licht Infrarotlicht (IR) sein. Da solches IR-Licht mit Wellenlängen von beispielsweise mehr als 900 nm für Passagiere nicht sichtbar ist, können auf diese Weise Störungen oder Irritationen bei den Passagieren vermieden werden.

Gemäss einer Ausführungsform verfügt die Überwachungsvorrichtung insbesondere über keine Mittel für einen Datenaustausch mit einer Steuerung der Aufzugkabinentür und/oder mit einer Steuerung einer die Aufzugkabinentür enthaltenden Aufzuganlage.

Mit anderen Worten kann die hierin vorgeschlagene Überwachungsvorrichtung speziell als eine in bereits existierenden Aufzuganlagen einfach nachzurüstende Baukomponente konzipiert sein. Dabei kann sie in solchen existierenden Aufzuganlagen besonders vorteilhaft zum Überwachen der Aufzugkabinentür eingesetzt werden, da bei diesen Aufzuganlagen herkömmlich eine Signalausgabe von Seiten der Aufzugsteuerung bzw. Kabinentürsteuerung nicht vorgesehen ist bzw. schwer abzugreifen ist oder zumindest nicht/kaum nachzuvollziehen ist, mittels welcher Steuersignale eine solche Steuerung die Aufzuganlage bzw. die Aufzugkabinentür steuert.

Indem die Überwachungseinrichtung gezielt dazu ausgelegt wird, auch ohne einen Datenaustausch mit der Steuerung der Aufzugkabinentür bzw. der Aufzuganlage operieren zu können, kann die Überwachungsvorrichtung speziell als autonom arbeitende Nachrüstkomponente in einer Aufzuganlage eingesetzt werden. Hierzu kann die Überwachungsvorrichtung vorzugsweise über eine eigene Stromversorgung, beispielsweise basierend auf einer Batterie, verfügen und/oder vorzugsweise lediglich über eine einzelne Datenschnittstelle verfügen, über die die von der Auswerteeinrichtung ausgegebenen Signale beispielsweise an das entfernt angeordnete Kontrollzentrum ausgegeben werden kann.

Es wird darauf hingewiesen, dass einige der möglichen Merkmale und Vorteile der Erfindung hierin mit Bezug auf unterschiedliche Ausführungsformen, insbesondere mit Bezug auf ein erfindungsgemässes Verfahren oder eine erfindungsgemässe Überwachungsvorrichtung zum Überwachen einer Aufzugkabine, insbesondere von einem entfernten Kontrollzentrum aus, oder ein Verfahren zum Modernisieren einer Aufzuganlage beschrieben sind. Ein Fachmann erkennt, dass die Merkmale in geeigneter Weise kombiniert, übertragen, angepasst oder ausgetauscht werden können, um zu weiteren Ausführungsformen der Erfindung zu gelangen.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt eine perspektivische Ansicht in eine Aufzugkabine mit einer Überwachungsvorrichtung gemäss einer Ausführungsform der vorliegenden Erfindung.
Fig. 2 zeigt eine Aufsicht auf eine hinsichtlich ihres Schliesszustandes überwachte Aufzugkabinentür in zwei verschiedenen Schliesszuständen.
Fig. 3 zeigt Graphen, welche positionsabhängige Abstandsmessungen zu Oberflächen der Aufzugkabinentür in den beiden in Fig. 2 dargestellten Schliesszuständen veranschaulicht.

Die Figuren sind lediglich schematisch und nicht massstabsgetreu. Gleiche Bezugszeichen bezeichnen in den verschiedenen Zeichnungen gleiche bzw. gleichwirkende Merkmale.

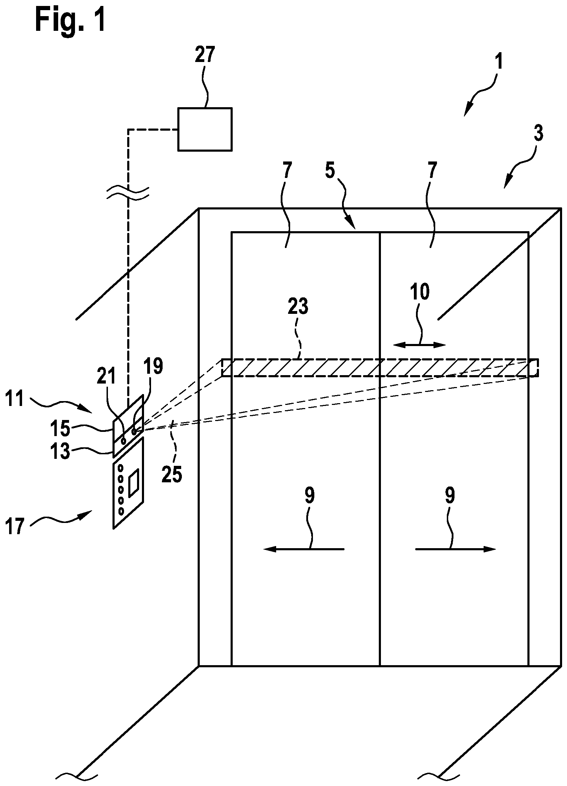

Fig. 1 zeigt eine perspektivische Sicht ins Innere einer Aufzugkabine 3 einer Aufzuganlage 1 mit einer Überwachungsvorrichtung 11 gemäss einer Ausführungsform der vorliegenden Erfindung. Die Aufzugkabine 3 weist eine Aufzugkabinentür 5 auf, bei der zwei Türflügel 7 zum Öffnen bzw. Schliessen in entgegengesetzte Richtungen 9 verfahren werden können. Ein Antrieb der Aufzugkabinentür 5 wird dabei von einer zugehörigen Steuerung (nicht dargestellt), welche in der Aufzugkabine 3 oder an anderer Stelle innerhalb der Aufzuganlage 1 vorgesehen sein kann, gesteuert.

Um einen aktuellen Schliesszustand der Aufzugkabinentür 5 überwachen zu können, ist im Innern der Aufzugkabine 3 die Überwachungsvorrichtung 11 vorgesehen. Im dargestellten Beispiel ist die Überwachungsvorrichtung 11 oberhalb eines Kabinenbedienpanels 17 angeordnet. Alternativ kann die Überwachungsvorrichtung 11 jedoch auch an einer anderen Stelle innerhalb der Aufzugkabine 3, beispielsweise in der Mitte oder am hinteren Ende einer Decke der Aufzugkabine 3, angeordnet sein.

Die Überwachungsvorrichtung 11 verfügt über eine Entfernungsmesseinrichtung 13 sowie eine Auswerteeinrichtung 15. Die Entfernungsmesseinrichtung 13 weist eine Optik 19 auf, in der eine Lichtquelle wie beispielsweise eine Laserlichtquelle sowie optische Komponenten wie zum Beispiel Linsen, Spiegel etc. vorgesehen sind. Die Optik 19 ist dabei dazu ausgelegt, einen oder mehrere Lichtstrahlen 25 in Richtung hin zu der Aufzugkabinentür 5 auszusenden.

Im dargestellten Beispiel wird das Licht 25 von der Optik 19 derart emittiert, dass ein Lichtband 23 quer über die Aufzugkabinentür 5 verlaufend projiziert wird. Das Lichtband 23 erstreckt sich dabei in einer zu den Bewegungsrichtungen 9 der Aufzugkabinentür 5 parallel verlaufenden Breitenrichtung 10.

Die Entfernungsmesseinrichtung 13 verfügt ferner über eine Detektionseinheit 21, um Licht zu detektieren, beispielsweise in Form eines Fotodetektors. Mithilfe der Detektionseinheit 21 kann Licht, welches von der Oberfläche der Aufzugkabinentür 5 im Bereich des projizierten Lichtbandes 23 rückflektiert wird, detektiert werden.

Anhand von durch die Entfernungsmesseinrichtung 11 zur Verfügung gestellter Daten kann dann auf eine oder mehrere Entfernungen zwischen der Entfernungsmesseinrichtung 13 und verschiedenen Positionen entlang der von dem Lichtband 23 beleuchteten Oberfläche der Aufzugkabinentür 5 rückgeschlossen werden. Hierzu kann insbesondere eine Laufzeit des ausgesendeten und rückreflektierten Licht gemessen und daraus die Entfernung errechnet werden.

Alternativ kann die Entfernungsmesseinrichtung die gewünschten Entfernungsmessungen auch mithilfe anderer optischer Messverfahren ermitteln. Solche optischen Messverfahren werden teilweise als Entfernungs- oder Tiefen-Bildgebung (englisch: range imaging) bezeichnet und können z.B. Verfahren einer Stereo-Triangulation, einer Lichtschicht-Triangulation (englisch: sheet of light triangulation), einer Lichtstrukturierung (englisch: structured light), einer Laufzeitmessung (englisch: time-of-flight), einer Interferometrie oder einer kodierten Apertur (englisch: coded aperture) umfassen.

Die Entfernungsmesseinrichtung 13 kann die von ihr gemessenen Informationen über die Entfernungen an die Auswerteeinrichtung 15 weiterleiten. Dort können diese ermittelten Entfernungen mit einer oder mehreren zuvor ermittelten Referenzentfernungen verglichen werden. Aufgrund eines solchen Vergleichs kann dann eine Information über den aktuellen Schliesszustand der Aufzugkabinentür 5 abgeleitet werden und von der Überwachungsvorrichtung 11 eine solche Information in Form eines Signals an eine andere Einrichtung wie beispielsweise ein entfernt zu der Aufzuganlage 1 angeordnetes Kontrollzentrum 27 weitergegeben werden.

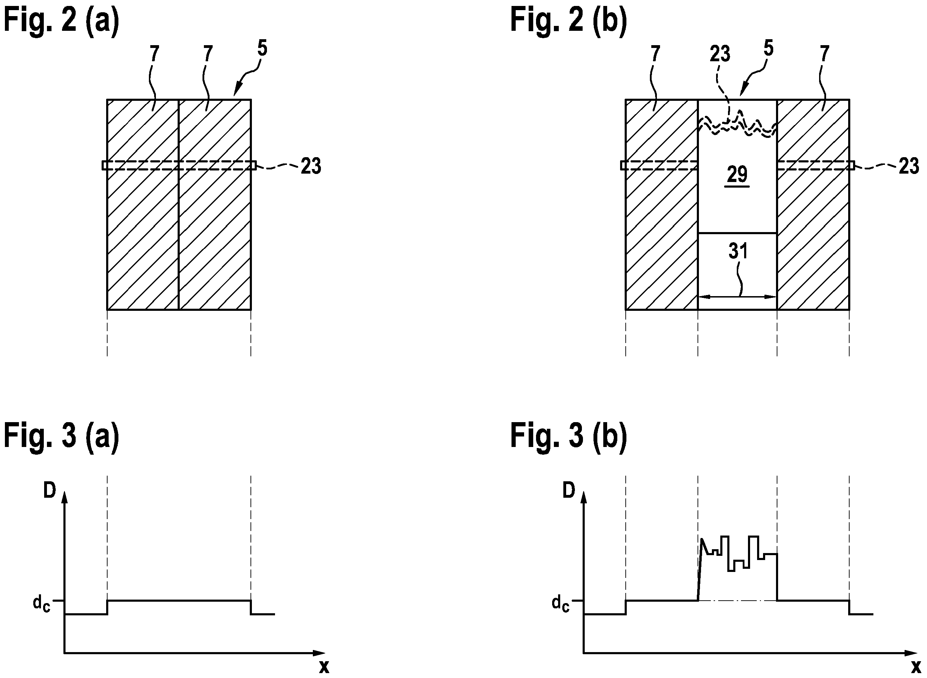

In den Fig. 2 und 3 sind zwei verschiedene Schliesszustände einer Aufzugkabinentür 5 sowie die in den beiden Fällen in der Entfernungsmesseinrichtung 13 gemessenen Entfernungsverteilungen dargestellt. Im Figurenteil (a) befindet sich die Kabinentür 5 dabei im vollständig geschlossenen Zustand, das heisst die beiden Türflügel 7 grenzen direkt aneinander an. Im Figurenteil (b) ist die Aufzugkabinentür 5 teilweise geöffnet, so dass sich ein offener Bereich zwischen den beiden Türflügeln 7 auftut, durch den hindurch eine Öffnung 31 hin zu einem dahinterliegenden Flur 29 entsteht.

Im vollständig geschlossenen Schliesszustand (a) wird im angegebenen Beispiel für jede Position x entlang des Lichtbandes 23 eine gleiche Entfernung d_{c} zwischen der Entfernungsmesseinrichtung 13 und einer deren Licht 25 reflektierenden Oberfläche gemessen. Im geschlossenen Zustand der Aufzugkabinentür entspricht diese Entfernung d_{c} der Entfernung zwischen der Entfernungsmesseinrichtung 13 und der nach innen gerichteten Oberfläche der Aufzugkabinentür 5. Gegebenenfalls kann dieser Entfernungswert d_{c} während eines vorab durchgeführten Kalibrierungsvorgangs einmalig bei mit Sicherheit geschlossener Aufzugkabinentür 5 gemessen werden und als Referenzwert bzw. Referenzentfernung abgespeichert werden.

Die positionsabhängige Entfernung braucht dabei nicht unbedingt, wie im in Fig. 3 dargestellten Beispiel gezeigt, für alle Positionen gleich sein, sondern kann positionsabhängig variieren. Beispielsweise kann sie bei einer Ausführungsform, bei der die Entfernungsmesseinrichtung an einer Kabinenseite angeordnet ist (wie in Fig. 1 dargestellt), kontinuierlich von einer Seite des Lichtbandes 23 bis zur anderen Seiten hin zunehmen.

Bei der im Figurenteil (b) dargestellten teilweise geöffneten Konfiguration der Aufzugkabinentür 5 trifft das Lichtband 23 nur an seinen seitlichen Rändern auf die nicht vollständig geöffnete Aufzugkabinentür 5 und wird dort zurück zu der Entfernungsmesseinrichtung 13 reflektiert. In der zwischen den beiden Türflügeln 7 entstehenden Öffnung 31 tritt das Licht des Lichtbandes 23 jedoch in den dahinterliegenden Flur 29 ein und wird dort von einer Wand oder eventuell anderen dort befindlichen Gegenständen rückflektiert. Ein Abstand D zu entsprechenden rückflektierenden Oberflächen ist dabei erheblich grösser als die Referenzentfernung d_{c}.

Indem die Auswerteeinrichtung die aktuell von der Entfernungsmesseinrichtung ermittelten Entfernungen für mehrere verschiedene Positionen entlang des Lichtbandes 23 mit den jeweiligen Referenzentfernungen d_{c} vergleicht, kann somit auf den aktuellen Schliesszustand der Aufzugkabinentür 5 rückgeschlossen werden und ein eine solche Information wiedergebendes Signal geeignet an das entfernte Kontrollzentrum 27 übermittelt werden.

Der Schliesszustand der Aufzugkabinentür 5 kann dabei vorteilhafterweise ermittelt werden, ohne dass die Überwachungsvorrichtung 11 Daten von einer Steuerung der Aufzugkabinentür 5 oder der gesamten Aufzuganlage 1 benötigt. Die Überwachungsvorrichtung 11 kann somit auf Mittel für einen Datenaustausch mit einer solchen Steuerung verzichten und kann daher einfach in Form eines autonom operierenden Geräts beispielsweise in eine bestehende Aufzuganlage 1 nachgerüstet werden.

Signalverarbeitungsfähigkeiten der Überwachungsvorrichtung 11 und insbesondere von deren Auswerteeinrichtung 15 können dabei ohne hohe Rechenleistung und/oder ohne rechenintensive Algorithmen auskommen. Stattdessen kann es genügen, dass in der Auswerteeinrichtung 15 lediglich analysiert wird, ob eine aktuell ermittelte Entfernung kleiner oder gleich der Referenzentfernung d_{c} ist, oder ob diese Entfernung grösser als diese Referenzentfernung d_{c} ist. Im ersteren Falle kann im Allgemeinen davon ausgegangen werden, dass die Aufzugkabinentür 5 entsprechend geschlossen ist, wohingegen im zweiten Fall davon auszugehen ist, dass die Aufzugkabinentür 5 zumindest über den Teilbereich, für dessen Positionen entsprechend grössere Entfernungen gemessen werden, geöffnet ist.

Das hierin vorgeschlagene Verfahren bzw. die entsprechend ausgelegte Überwachungsvorrichtung 11 ermöglichen eine Vielzahl von Vorteilen.

Neben der bereits erwähnten möglichst fehlenden Signalverbindung zu der Aufzugsteuerung bzw. der Türsteuerung wird insbesondere kein Vorwissen über eine spezielle Arbeitsweise einer in einem bestehenden Aufzug eingesetzten Türsteuerung benötigt. Somit kann die Überwachungsvorrichtung als Nachrüstkomponente in jede beliebige Aufzugkabine installiert werden, um dort die Aufzugkabinentür zu überwachen.

Die Überwachungsvorrichtung 11 kommt dabei mit verhältnismässig kostengünstiger, einfacher Hardware aus. Auch ein Aufwand für deren Installation und insbesondere für eine Verkabelung kann gering gehalten werden.

Ferner kann die Entfernungsmesseinrichtung 13 zwar ähnlich wie ein herkömmliche Bilder lieferndes Kamerasystem oder Scannersystem ausgebildet sein, jedoch in spezieller Weise derart konfiguriert sein, dass sie lediglich die speziell ortsabhängige Entfernungsmessung durchführt. Im Gegensatz zu herkömmlichen Videokameras verletzt der Einsatz einer solchen Überwachungsvorrichtung somit nicht eine Privatsphäre von Passagieren, da die generierten Bilder zwar Tiefeninformationen enthalten und somit Angaben über allgemeine Formen beinhaltet, jedoch keine Details wie zum Beispiel Gesichter oder Ausdrücke wiedergeben.

Zusammenfassend kann eine hierin beschriebene Überwachungsvorrichtung 11 als eine autonom arbeitsfähige Nachrüstkomponente in existierende Aufzuganlagen 1 installiert werden, braucht keine Daten von einer Steuerung der Aufzugkabinentür 5 bzw. der Aufzuganlage 1 erhalten und kommt mit einer verhältnismässig einfachen Datenverarbeitung aus, welche lediglich ein Vergleichen von erfassten Entfernungswerten mit Referenzwerten ausführen braucht.

Abschliessend sei darauf hingewiesen, dass die hier vorgeschlagene Überwachungsvorrichtung aufgrund ihrer Eigenschaft, Entfernungen messen zu können und somit Tiefen-Informationen innerhalb eines Sichtfelds angeben zu können, ergänzend auch für andere Zwecke eingesetzt werden kann.

Beispielsweise können Fehlfunktionen z.B. in Reaktion auf einen defekten Lichtvorhang detektiert werden. Dies kann beispielsweise geschehen, indem beobachtet wird, dass die Aufzugkabinentür beim Schliessen ein sich im Türrahmen befindliches Objekt wie beispielsweise einen Passagier berührt, ohne zuvor ihre Verfahrrichtung umzukehren, anstatt, wie bei korrekt funktionierendem Lichtvorhang zu erwarten, ihre Bewegungsrichtung umzukehren, bevor die Aufzugkabinentür 5 das Objekt trifft.

Ferner könnten mithilfe einer Tiefen-Informationen liefernden Kamera Anzahlen von Passagieren in der Aufzugkabine gezählt werden und gegebenenfalls ihre Gesamtmasse abgeschätzt werden.

Als weitere Option könnten Hindernisse detektiert werden, die im Bereich der Aufzugkabinentür 5 längere Zeitdauer hinweg verbleiben und zu einem Ausfall der Aufzuganlage führen können. Auch könnten in der Aufzugkabine über eine längere Zeitdauer hin verbleibende Gegenstände erkannt werden und beispielsweise ein Gebäudemanagement hierüber informiert werden.

Abschliessend ist darauf hinzuweisen, dass Begriffe wie "aufweisend", "umfassend", etc. keine anderen Elemente oder Schritte ausschliessen und Begriffe wie "eine" oder "ein" keine Vielzahl ausschliessen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren zum Überwachen einer Aufzugkabinentür (5), wobei das Verfahren aufweist:
Ermitteln einer Entfernung (D) anhand von durch eine Entfernungsmesseinrichtung (13) in Richtung der Aufzugkabinentür (5) ausgesendetem und abhängig von einem aktuellen Schliesszustand der Aufzugkabinentür (5) an der Aufzugkabinentür (5) reflektiertem Licht (25),
**dadurch gekennzeichnet, dass** es aufweist
Ableiten einer Information über den aktuellen Schliesszustand der Aufzugkabinentür (5) allein durch ein Vergleichen der ermittelten Entfernung (D) mit einer zuvor ermittelten Referenzentfernung (d_{c}); und
Ausgeben eines die Information wiedergebenden Signals.

2. Verfahren nach Anspruch 1, wobei mehrere Entfernungen (D) bezüglich mehrerer nebeneinander angeordneter Positionen entlang einer zu der Entfernungsmesseinrichtung (13) gerichteten Oberfläche ermittelt werden; und
wobei eine Information über den aktuellen Schliesszustand der Aufzugkabinentür (5) allein durch ein Vergleichen der mehreren ermittelten Entfernungen (D) jeweils mit einer zugehörigen zuvor ermittelten Referenzentfernung (d_{c}) abgeleitet wird, wobei die abgeleitete Information eine Information über einen aktuellen Verfahrzustand der Aufzugkabinentür (5) beinhaltet, und ein diese Information wiedergebendes Signal ausgegeben wird.

3. Verfahren nach Anspruch 1 oder 2, wobei die Referenzentfernung (d_{c}) in einem vorhergehenden Kalibriervorgang ermittelt wird durch Aufnehmen wenigstens eines Entfernungsreferenzwertes, während sich die Aufzugkabinentür (5) in einem vordefinierten Zustand befindet.

4. Überwachungsvorrichtung (11) zum Überwachen einer Aufzugkabinentür (5), wobei die Überwachungsvorrichtung (11) dazu eingerichtet ist, eine Entfernung (D) anhand von durch eine Entfernungsmesseinrichtung (13) in Richtung der Aufzugkabinentür (5) ausgesendetem und abhängig von einem aktuellen Schliesszustand der Aufzugkabinentür (5) an der Aufzugkabinentür (5) reflektiertem Licht (25) zu bestimmen,
**dadurch gekennzeichnet, dass**
die Überwachungsvorrichtung (11) dazu eingerichtet ist
eine Information über den aktuellen Schliesszustand der Aufzugkabinentür (5) allein durch ein Vergleichen der ermittelten Entfernung (D) mit einer zuvor ermittelten Referenzentfernung (d_{c}) abzuleiten; und
eines die Information wiedergebenden Signals auszugeben.

5. Überwachungsvorrichtung nach Anspruch 4, wobei die Überwachungsvorrichtung (11) aufweist:
eine optisch arbeitende Entfernungsmesseinrichtung (13), welche dazu eingerichtet ist, anhand von ausgesendetem und an einem Objekt reflektiertem Licht (25) eine Entfernung (D) zu dem Objekt zu ermitteln;
eine Auswerteeinrichtung (15), welche dazu eingerichtet ist, allein durch ein Vergleichen wenigstens einer von der Entfernungsmesseinrichtung (13) ermittelten Entfernung (D) mit einer zuvor ermittelten Referenzentfernung (d_{c}) eine Information über den aktuellen Schliesszustand der Aufzugkabinentür (5) abzuleiten und ein diese Information wiedergebendes Signal auszugeben.

6. Überwachungsvorrichtung nach Anspruch 4 oder 5, wobei die Entfernungsmesseinrichtung (13) dazu eingerichtet ist, mehrere Entfernungen (D) zu dem Objekt bezüglich mehrerer nebeneinander angeordneter Positionen entlang einer zu der Entfernungsmesseinrichtung (13) gerichteten Oberfläche des Objekts zu ermitteln; und wobei die Auswerteeinrichtung (15) dazu eingerichtet ist, allein durch ein Vergleichen der mehreren ermittelten Entfernungen (D) jeweils mit einer zugehörigen zuvor ermittelten Referenzentfernung (d_{c}) eine Information über den aktuellen Schliesszustand der Aufzugkabinentür (5) abzuleiten, wobei die abgeleitete Information eine Information über einen aktuellen Verfahrzustand der Aufzugkabinentür (5) beinhaltet, und ein diese Information wiedergebendes Signal auszugeben.

7. Überwachungsvorrichtung nach einem der Ansprüche 4 bis 6, wobei die Entfernungsmesseinrichtung (13) dazu eingerichtet ist, Licht (25) in Form eines sich quer zu einer Lichtausbreitungsrichtung in einer Breitenrichtung erstreckenden Lichtbandes (23) auszusenden und Licht (25), welches von mehreren Positionen entlang des auf das Objekt treffenden Lichtbandes (23) reflektiert wurde, zu detektieren und daraus bezüglich jeder der Positionen die Entfernung (D) zu dem Objekt zu ermitteln.

8. Überwachungsvorrichtung nach einem der Ansprüche 4 bis 7, wobei die Entfernungsmesseinrichtung (13) als ein eine Tiefeninformation liefernder Scanner ausgebildet ist.

9. Überwachungsvorrichtung nach einem der Ansprüche 4 bis 7, wobei die Entfernungsmesseinrichtung (13) als eine eine Tiefeninformation liefernde TOF-Kamera ausgebildet ist.

10. Überwachungsvorrichtung nach einem der Ansprüche 4 bis 9, wobei das Licht (25) Infrarotlicht ist.

11. Überwachungsvorrichtung nach einem der Ansprüche 4 bis 10, wobei die Überwachungsvorrichtung (11) über keine Mittel für einen Datenaustausch mit einer Steuerung der Aufzugkabinentür (5) und/oder mit einer Steuerung einer die Aufzugkabinentür enthaltenden Aufzuganlage (1) aufweist.

12. Aufzuganlage (1) aufweisend:
eine Aufzugkabine (3) mit einer Aufzugkabinentür (5); und
eine Überwachungsvorrichtung (11) nach einem der Ansprüche 4 bis 11.

13. Verfahren zum Überwachen einer Aufzugkabinentür (5) von einem entfernten Kontrollzentrum (27) aus, wobei das Verfahren umfasst:
Installieren einer Überwachungsvorrichtung (11) gemäss einem der Ansprüche 4 bis 11 benachbart zu der Aufzugkabinentür (5);
Auswerten des von der Überwachungsvorrichtung (11) ausgegebenen Signals in dem Kontrollzentrum (27), um daraus die Information über den aktuellen Schliesszustand der Aufzugkabinentür (5) zu ermitteln.

14. Verfahren nach Anspruch 13, ferner aufweisend ein Kalibrieren der Überwachungsvorrichtung (11) durch Aufnehmen wenigstens eines Referenzwertes als die Referenzentfernung (d_{c}) während sich die Aufzugkabinentür (5) in einem vordefinierten Zustand befindet;

15. Verfahren zum Modernisieren einer Aufzuganlage (1), umfassend ein Installieren einer Überwachungsvorrichtung (11) gemäss einem der Ansprüche 4 bis 11 benachbart zu einer Aufzugkabinentür (5) der Aufzuganlage (1).

## Claims

1. Method for monitoring an elevator car door (5), the method comprising:
determining a distance (D) on the basis of light (25) emitted by a distance measuring device (13) in the direction of the elevator car door (5) and reflected on the elevator car door (5) depending on a current closure state of the elevator car door (5), **characterized in that** the method comprises deriving information regarding the current closure state of the elevator car door (5) solely by comparing the determined distance (D) with a previously determined reference distance (d_{c}); and
outputting a signal representing the information.

2. Method according to claim 1, wherein a plurality of distances (D) are determined with respect to a plurality of positions arranged one next to the other along a surface directed toward the distance measuring device (13); and
wherein information regarding the current closure state of the elevator car door (5) is derived solely by comparing the plurality of determined distances (D) with an associated previously determined reference distance (d_{c}), wherein the derived information is information regarding a current movement state of the elevator car door (5), and a signal representing this information is output.

3. Method according to either claim 1 or claim 2, the reference distance (d_{c}) being determined in a preceding calibration process by recording at least one distance reference value while the elevator car door (5) is in a predefined state.

4. Monitoring device (11) for monitoring an elevator car door (5), the monitoring device (11) being configured to determine a distance (D) on the basis of light (25) emitted by a distance measuring device (13) in the direction of the elevator car door (5) and reflected on the elevator car door (5) depending on a current closure state of the elevator car door (5), **characterized in that** the monitoring device (11) is configured to derive information regarding the current closure state of the elevator car door (5) solely by comparing the determined distance (D) with a previously determined reference distance (d_{c}); and
to output a signal representing the information.

5. Monitoring device according to claim 4, wherein the monitoring device (11) comprises:
an optically operating distance measuring device (13) which is configured to determine a distance (D) from the object on the basis of light (25) which is emitted and reflected on an object;
an evaluation device (15) which is configured to derive information regarding the current closure state of the elevator car door (5) solely by comparing at least one distance (D) determined by the distance measuring device (13) with a previously determined reference distance (d_{c}) and to output a signal representing this information.

6. Monitoring device according to either claim 4 or claim 5, wherein the distance measuring device (13) is configured to determine a plurality of distances (D) from the object with respect to a plurality of positions arranged one next to the other along a surface of the object directed toward the distance measuring device (13); and
wherein an evaluation device (15) is configured to derive information regarding the current closure state of the elevator car door (5) solely by comparing the plurality of determined distances (D) with an associated previously determined reference distance (d_{c}), wherein the derived information is information regarding a current movement state of the elevator car door (5), and to output a signal representing this information.

7. Monitoring device according to any of claims 4 to 6, wherein the distance measuring device (13) is configured to emit light (25) in the form of a light strip (23) extending transversely to a light propagation direction in a width direction and to detect light (25) which has been reflected from a plurality of positions along the light strip (23) hitting the object, and to determine the distance (D) from the object with respect to each of the positions from said light.

8. Monitoring device according to any of claims 4 to 7, wherein the distance measuring device (13) is configured as a scanner supplying depth information.

9. Monitoring device according to any of claims 4 to 7, wherein the distance measuring device (13) is configured as a TOF camera supplying depth information.

10. Monitoring device according to any of claims 4 to 9, wherein the light (25) is infrared light.

11. Monitoring device according to any of claims 4 to 10, wherein the monitoring device (11) does not have any means for data exchange with a controller of the elevator car door (5) and/or with a controller of an elevator system (1) containing the elevator car door.

12. Elevator system (1), comprising:
an elevator car (3) having an elevator car door (5); and
a monitoring device (11) according to any of claims 4 to 11.

13. Method for monitoring an elevator car door (5) from a remote control center (27), wherein the method comprises:
installing a monitoring device (11) according to any of claims 4 to 11 adjacent to the elevator car door (5);
evaluating the signal output by the monitoring device (11) in the control center (27) in order to determine the information regarding the current closure state of the elevator car door (5) therefrom.

14. Method according to claim 13, further comprising calibrating the monitoring device (11) by including at least one reference value as the reference distance (d_{c}) while the elevator car door (5) is in a predefined state.

15. Method for modernizing an elevator system (1), comprising installing a monitoring device (11) according to any of claims 4 to 11 adjacent to an elevator car door (5) of the elevator system (1).

## Revendications

1. Procédé de surveillance d'une porte de cabine d'ascenseur (5), le procédé comprenant :
la détermination d'une distance (D) à l'aide d'une lumière (25) émise par un système de mesure de distance (13) en direction de la porte de cabine d'ascenseur (5) et réfléchie sur la porte de cabine d'ascenseur (5) en fonction d'un état courant de fermeture de la porte de cabine d'ascenseur (5), **caractérisé en ce qu'**il présente la déduction d'une information sur l'état courant de fermeture de la porte de cabine d'ascenseur (5) uniquement par comparaison de la distance déterminée (D) avec une distance de référence déterminée précédemment (d_{c}) ; et
l'émission d'un signal représentant l'information.

2. Procédé selon la revendication 1, selon lequel plusieurs distances (D) sont déterminées par rapport à plusieurs positions disposées de façon adjacente le long d'une surface orientée vers le système de mesure de distance (13) ; et
une information sur l'état courant de fermeture de la porte de cabine d'ascenseur (5) étant déduite uniquement par comparaison des nombreuses distances (D) déterminées respectivement avec une distance de référence (d_{c}) associée déterminée précédemment, l'information déduite contenant une information sur un état courant de déplacement de la porte de cabine d'ascenseur (5), et un signal représentant cette information étant émis.

3. Procédé selon la revendication 1 ou 2, selon lequel la distance de référence (d_{c}) est déterminée dans un processus d'étalonnage précédent par enregistrement d'au moins une valeur de référence de distance lorsque la porte de cabine d'ascenseur (5) se trouve dans un état prédéfini.

4. Dispositif de surveillance (11) permettant de surveiller une porte de cabine d'ascenseur (5), le dispositif de surveillance (11) étant conçu pour déterminer une distance (D) à l'aide d'une lumière (25) émise par un système de mesure de distance (13) en direction de la porte de cabine d'ascenseur (5) et réfléchie sur la porte de cabine d'ascenseur (5) en fonction d'un état courant de fermeture de la porte de cabine d'ascenseur (5), **caractérisé en ce que** le dispositif de surveillance (11) est conçu pour déduire une information sur l'état courant de fermeture de la porte de cabine d'ascenseur (5) uniquement par comparaison de la distance déterminée (D) avec une distance de référence déterminée précédemment (d_{c}) ; et
pour émettre un signal représentant l'information.

5. Dispositif de surveillance selon la revendication 4, le dispositif de surveillance (11) présentant :
un système de mesure de distance à fonctionnement optique (13), lequel est conçu pour déterminer une distance (D) par rapport à un objet à l'aide de la lumière (25) émise et réfléchie sur ledit objet ;
un système d'évaluation (15) est conçu pour déduire une information sur l'état courant de fermeture de la porte de cabine d'ascenseur (5) uniquement par comparaison d'au moins une distance (D) déterminée par le système de mesure de distance (13) avec une distance de référence déterminée précédemment (d_{c}), et pour émettre un signal représentant cette information.

6. Dispositif de surveillance selon la revendication 4 ou 5, dans lequel le système de mesure de distance (13) est conçu pour déterminer plusieurs distances (D) par rapport à l'objet relativement à plusieurs positions disposées de façon adjacente le long d'une surface de l'objet orientée vers le système de mesure de distance (13) ; et
le système d'évaluation (15) étant conçu pour déduire une information sur l'état courant de fermeture de la porte de cabine d'ascenseur (5) uniquement par comparaison des nombreuses distances déterminées (D) respectivement avec une distance de référence associée déterminée précédemment (d_{c}), l'information déduite contenant une information sur un état courant de déplacement de la porte de cabine d'ascenseur (5), et pour émettre un signal représentant cette information.

7. Dispositif de surveillance selon l'une des revendications 4 à 6, dans lequel le système de mesure de distance (13) est conçu pour émettre de la lumière (25) sous la forme d'une bande lumineuse (23) s'étendant transversalement à une direction de diffusion de la lumière dans une direction de largeur, pour détecter la lumière (25), laquelle a été réfléchie depuis plusieurs positions le long de la bande lumineuse (23) touchant l'objet, et pour déterminer, à partir de ladite lumière, la distance (D) par rapport à l'objet relativement à chaque position.

8. Dispositif de surveillance selon l'une des revendications 4 à 7, dans lequel le système de mesure de distance (13) est réalisé sous la forme d'un scanner fournissant des informations de profondeur.

9. Dispositif de surveillance selon l'une des revendications 4 à 7, dans lequel le système de mesure de distance (13) est réalisé sous la forme d'une caméra TOF fournissant des informations de profondeur.

10. Dispositif de surveillance selon l'une des revendications 4 à 9, dans lequel la lumière (25) est une lumière infrarouge.

11. Dispositif de surveillance selon l'une des revendications 4 à 10, le dispositif de surveillance (11) ne présentant aucun moyen d'échange de données avec une commande de la porte de cabine d'ascenseur (5) et/ou avec une commande d'une installation d'ascenseur (1) comportant la porte de cabine d'ascenseur.

12. Installation d'ascenseur (1) présentant :
une cabine d'ascenseur (3) comportant une porte de cabine d'ascenseur (5) ; et
un dispositif de surveillance (11) selon l'une des revendications 4 à 11.

13. Procédé de surveillance d'une porte de cabine d'ascenseur (5) à partir d'une salle de commande à distance (27), le procédé comprenant :
l'installation d'un dispositif de surveillance (11) selon l'une des revendications 4 à 11 à côté de la porte de cabine d'ascenseur (5) ;
l'évaluation du signal émis par le dispositif de surveillance (11) dans la salle de commande (27) afin de déterminer, à partir dudit signal, l'information sur l'état courant de fermeture de la porte de cabine d'ascenseur (5).

14. Procédé selon la revendication 13, présentant en outre l'étalonnage du dispositif de surveillance (11) par inclusion d'au moins une valeur de référence comme distance de référence (d_{c}) lorsque la porte de cabine d'ascenseur (5) se trouve dans un état prédéfini ;

15. Procédé de modernisation d'une installation d'ascenseur (1), comprenant le montage d'un dispositif de surveillance (11) selon l'une des revendications 4 à 11 à côté d'une porte de cabine d'ascenseur (5) de l'installation d'ascenseur (1).
